# EUROPEAN PATENT APPLICATION

(11) **EP 3 181 620 A1**
(43) Date of publication of application: **21.06.2017**
(21) Application number: 16002221.6
(22) Date of filing: 17.10.2016
(51) Int. Cl.: C08J 9/16, C08J 9/232, C08J 9/32

(54) **MICROWAVE MOLDED ARTICLE AND MANUFACTURING METHOD THEREOF**

(30) Priority: 17.12.2015 TW 104142454
(71) Applicant: SUNKO INK CO., LTD., Dali Dist. Taichung City 41282 (TW); Tayin Research & Development Co., Ltd., 41263 Taichung City (TW)
(72) Inventor: HUANG, Yi-Jung, 41282 Taichung City (TW); LIN, Ching Hui, 41263 Taichung City (TW); HUANG, Ting-Kai, 41282 Taichung City (TW); LIN, Hsin-Hung, 41282 Taichung City (TW); CHIU, Chien-Yuan, 41282 Taichung City (TW); LIN, Hong-Yi, 41282 Taichung City (TW); SHIH, Kuo-Fen, 41282 Taichung City (TW); WANG, Ya-Chi, 41282 Taichung City (TW)
(74) Representative: Flaccus, Rolf-Dieter

(57) **Abstract**

A foamable composition for preparing foamed thermoplastic polyurethane, and microwave molded articles thereof are provided. The foamable composition comprises non-foamed thermoplastic polyurethane particles and a foaming agent, wherein the non-foamed thermoplastic polyurethane particles have a viscosity between 10,000 poise and 40,000 poise measured at 170°C according to JISK 7311 test method.

## Description

### CROSS REFERENCE OF RELATED APPLICATIONS

This application claims the benefit of priority of TW Patent Applications No. 104130207 and No. 104130208 filed on Sep. 11, 2015, and TW Patent Application No.104142454 filed on Dec. 17, 2015, the content of which is incorporated herein by reference in its entirety.

### BACKGROUND OF THE INVENTION

### FIELD OF THE INVENTION

The present invention relates to a microwave molded article and, more particularly, to a microwave molded article formed by applying microwave irradiation to the plastic or rubber particles in a mold. The present invention also relates to foamed thermoplastic polyurethane and a molded article made by microwave irradiation.

### DESCRIPTION OF THE PRIOR ART

Plastic or rubber materials can be used to produce a variety of molded articles. Plastic or rubber molded articles can be widely used in the manufacture of various necessities of daily life, such as all kinds of packaging materials, automotive parts, cushions, hoses, foam mats, high jump mats, sports shoes and the like. Thermoplastic polyurethane (TPU) is the raw material of thermoplastic elastomers (TPE). The TPE made from TPU has many advantages, such as viscosity, high elasticity, abrasion resistance, impact resistance, distortion resistance, high extensibility, weather resistance, chemical resistance, non-toxicity, and high tear strength etc., and has been widely used in shoes, automobiles, packaging materials, heat insulation materials, and other products.

Injection molding is the most common method for preparing plastic or rubber molded articles comprising TPU foam. The injection molding process involves heating the plastic or rubber particles in the injection molding machine to form a melt, which is then compressed to move through the nozzles and injected into the mold at lower temperature. Therefore, the production process of injection molding is time consuming. Generally, the mold of injection molding is made of metal, such as steel, for resisting the high temperature needed in melting the plastic or rubbers. However, the weight of the injection mold is quite heavy, leading to the inconvenience of replacement of the mold. Another method for preparing TPU molded foam in the prior art is steam molding method. However, the steam molding method involves high-temperature or high-pressure processes, which often need to consume more energy, resulting in increased costs and lower economic efficiency and commercial value of TPU molded foam product. In addition, to enhance the utility of TPU molded foam used in all kinds of products, how to improve the physical properties of TPU molded foam, for example, is also a subject of research in the industry. For instance, there exists a need to reduce the density of the TPU molded foam for manufacturing shoes with comfort, flexibility and light weight.

### SUMMARY OF THE INVENTION

The present invention relates to a microwave molded article and a manufacturing method thereof. More specifically, the present invention puts the microwave absorbing chemical composition into a specific mold and then irradiates the chemical composition with microwave for a period of time to form the molded article. Compared to traditional injection molding, the microwave molding method of the present invention has the advantages of energy saving, rapid shaping, low equipment cost and being environmentally-friendly.

The chemical composition that is suitable for the microwave molded article of the present invention comprises at least one suitable composition coming from of any combination of the following components: plastic or rubber particles that absorb microwave, plastic or rubber particles that don't absorb microwave, an additive that absorbs microwave, and a variety of suitable auxiliaries and pigments.

The polymer structure of the plastic or rubber particles that absorb microwave generally comprises highly polar functional groups, such as OH, NH₂, COOH, or other groups that can form an intramolecular or intermolecular hydrogen bonding. Such plastic or rubber particles typically are, for example, polyurethane (PU) or polyamide. The composition of the present invention may also contain non-polar or less polar plastic or rubber particles that don't absorb microwave, such as plastic PS, PE, PP, ethylene vinyl acetate (EVA), Poly (methyl methacrylate), or rubber, including natural rubber, synthetic rubber SBR, SBS, SEBS, SIS and the like. The additive that absorbs microwave generally refers to chemical substances that are not polymers, such as water molecules, alcohols, glycerol, graphite, and the like. Using the microwave absorbing additive makes the plastic or rubber particles that don't absorb microwave be molded. Such additives may also be mixed with the plastic or rubber particles that absorb microwave to accelerate microwave molding.

The plastic or rubber particles contained in the composition of the present invention may be foamed, non-foamed, or a combination thereof. The color of the plastic or rubber particles may change, and may also comprise a combination of various colors. The shape of the plastic or rubber particles may vary and is not limited to sphere. The shape may be square, star-shaped, tubular, hollow, solid, or a combination thereof. The hardness of the plastic or rubber particles may change, and may comprise a combination of different hardness.

The compositions of the invention may contain a suitable foaming agent that facilitates the foaming of the plastic or rubber particles during the microwave molding process.

In one aspect, the present invention provides a foamable composition (also called formulation) for the preparation of foamed thermoplastic polyurethanes, foamed thermoplastic polyurethanes prepared through the foaming and pelletizing of the composition described above and a method of foaming and pelletizing thereof. The foamed thermoplastic polyurethanes of the present invention have a microwave-refoamable property, so the present invention further provides a microwave molded article prepared through second foaming of the foamed thermoplastic polyurethanes described above and a method for manufacturing the same. The foamed thermoplastic polyurethanes of the present invention have an advantage of light weight. After the treatment of the foamable composition with microwave, the thermoplastic polyurethane will have a bonding effect on the surfaces of its particles and will be re-foamed simultaneously so as to form the microwave molded article (or called thermoplastic polyurethane foam). Unlike conventional injection molding method and steam molding method, the microwave method for preparing molded articles is simple in process as well as time- and energy-saving.

In one embodiment, the present invention provides a foamable composition for preparing foamed thermoplastic polyurethane, comprising non-foamed thermoplastic polyurethane particles and a foaming agent, wherein the non-foamed thermoplastic polyurethane particles have a viscosity between 10,000 poise and 40,000 poise measured at 170°C according to JISK 7311 test method.

In another embodiment, the present invention provides the foamable composition as above, wherein the viscosity of the non-foamed thermoplastic polyurethane particles is between 15,000 poise and 35,000 poise.

In another embodiment, the present invention provides the foamable composition as above, wherein the non-foamed thermoplastic polyurethane particles have a particle size between 2.5 mm and 4.5 mm.

In another embodiment, the present invention provides the foamable composition as above, wherein the non-foamed thermoplastic polyurethane particles have a hardness of 40 Shore A scale to 64 Shore D scale.

In another embodiment, the present invention provides the foamable composition as above" wherein the non-foamed thermoplastic polyurethane particles have a density between 1.0 g/cm³ and 1.25 g/cm³.

In one embodiment, the present invention provides a foamed thermoplastic polyurethane, wherein the foamed thermoplastic polyurethane has at least one of properties as below: a particle size between 3 mm and 7.5 mm; a hardness of 40 Shore C scale to 80 Shore C scale; and a density between 0.2 g/cm³ and 0.8 g/cm³.

In another embodiment, the present invention provides the foamed thermoplastic polyurethane as above wherein the foamed thermoplastic polyurethane contains residual foaming agent.

In another embodiment, the present invention provides the foamed thermoplastic polyurethane as above, wherein a single particle of the foamed thermoplastic polyurethane has a plurality of colors.

In still another aspect, the present invention provides a microwave molded article which can be made from any suitable foamed thermoplastic polyurethane.

In one embodiment, the present invention provides a microwave molded article having at least one of the below properties: a density between 0.15 g/cm³ and 0.6 g/cm³, and a hardness of 40 Shore C scale to 80 Shore C scale.

In still another aspect, the present invention provides various microwave molded articles.

A microwave molded article according to the embodiments of the present invention is provided. The microwave molded article comprises a plurality of particles bonded by microwave irradiation. The plurality of particles may be selected from foamed thermoplastic polyurethane obtained by reference to the descriptions as above or other suitable plastic particles. The plurality of particles have a plurality of first foamed particles and a plurality of second foamed particles whose hardness is different from that of the first foamed particles, wherein the microwave molded article has a first section formed from the plurality of first foamed particles bonded by microwave irradiation and a second section formed from the plurality of second foamed particles bonded by microwave irradiation; or the microwave molded article is formed from the plurality of first foamed particles and the plurality of second foamed particles that are randomly dispersed, mixed, and bonded by microwave irradiation. According to embodiments of the present invention, the microwave molded article further has an outline on its outer surface, wherein the outline keeps a portion of the shape of the first foamed particles or the second foamed particles as shown before the microwave irradiation. According to embodiments of the present invention, the microwave molded article further comprises a region which has been subject to at least twice microwave irradiation. According to embodiments of the present invention, the microwave molded article further comprises a first section and a second section, wherein the first section has been subject to at least twice microwave irradiation, the second section has been subject to only once microwave irradiation, and there is an interface formed by cutting between the first section and the second section.

The microwave molded article provided according to embodiments of the present invention, further features in that the number of times of microwave irradiation to the first section is different from the number of times of microwave irradiation to the second section.

According to embodiments, the present invention provides a microwave molded article, made by irradiating microwave to a plurality of foamed particles placed in a mold, wherein the foamed particles are foamed thermoplastic polyurethane, the microwave molded article has a flange formed by substantially fully conforming to a groove of the mold, and the outer surface of the flange is formed with no outline that keeps any portion of the shape of the particles as shown before the microwave irradiation.

According to embodiments, the present invention provides the microwave molded article as above, further comprising a section connecting the flange, wherein the outer surface of the section has an outline that keeps a portion of the shape of the foamed particles as shown before the microwave irradiation.

According to embodiments, the present invention provides the microwave molded article as above, wherein the flange has a width between 100 micrometers and 1,000 micrometers.

According to embodiments, the present invention provides a method of manufacturing a microwave molded article, comprising providing a plurality of particles being dispersible, the plurality of particles comprising foamed thermoplastic polyurethane; providing an object having a surface portion being able to carry the plurality of particles; distributing the plurality of particles on the surface portion; and forming the microwave molded article by irradiating the object and the plurality of particles simultaneously with microwave to combine the object with the plurality of particles.

According to embodiments, the present invention provides the method of manufacturing a microwave molded article as above, further comprises providing an adhesive layer between the plurality of particles and the surface portion before the microwave irradiation step.

According to embodiments, the present invention provides the method of manufacturing a microwave molded article as above, wherein the surface portion comprises a rubber.

According to embodiments, the present invention provides the method of manufacturing a microwave molded article as above, wherein the surface portion comprises a rubber and the adhesive layer is a heat-melting adhesive.

According to embodiments, the present invention provides the method of manufacturing a microwave molded article as above, wherein the surface portion comprises a fabric.

According to embodiments, the present invention provides the method of manufacturing a microwave molded article as above, wherein the surface portion comprises a fabric containing nylon fibers and the adhesive layer is a heat-melting adhesive.

According to embodiments, the present invention provides the method of manufacturing a microwave molded article as above, wherein the microwave molded article is a part of a shoe.

According to embodiments, the present invention provides the method of manufacturing a microwave molded article as above, wherein the foamed thermoplastic polyurethane has at least one of below properties: a particle size between 3 mm and 7.5 mm; a hardness of 40 Shore C scale to 80 Shore C scale; and a density between 0.2 g/cm³ and 0.8 g/cm³.

According to embodiments, the present invention provides a microwave molded article that is manufactured by the methods as above.

Other aspects and a variety of microwave molded articles are included in the present invention for resolving other problems, and will be disclosed in detail in conjunction with the aspects described above in the following detailed description.

### BRIEF DESCRIPTION OF THE DRAWINGS

Figs. 1 a and 1 b show the microwave molded article according to one embodiment of the present invention;
Figs. 2a and 2b show the failed microwave molded article;
Fig. 3 shows another failed microwave molded article;
Fig. 4 shows the scanning electron microscope image of the molded article according to one embodiment of the present invention;
Fig. 5 shows the scanning electron microscope image of a failed molded article;
Figs. 6 and 7 show the microwave molded article having a surface with a designed pattern according to one embodiment of the present invention;
Figs. 8A, 8B, 9A and 9B show the microwave molded articles having hardness variation portions according to some embodiments of the present invention;
Figs. 10A, 10B, and 10C show microwave molded articles having flanges according to some embodiments of the present invention wherein Fig. 10 is a schematic drawing;
Fig. 11A is a schematic drawing of non-foamed thermoplastic polyurethane tubes according to some embodiments of the present invention;
Fig. 11B shows a microwave molded articles made from non-foamed thermoplastic polyurethane tubes by directly microwave irradiation according to some embodiments of the present invention;
Fig. 12A and 12B show microwave molded articles made from a composition of multiple plastic or rubber particles according to some embodiments of the present invention ;
Fig. 13A shows a composite microwave molded article composed of a rubber block bonded with foamed polyurethane according to some embodiments of the present invention ; and
Fig. 13B a composite microwave molded article composed of fabric bonded with foamed polyurethane according to some embodiments of the present invention.

### DETAILED DESCRIPTION OF THE EMBODIMENTS

For fully understanding the present invention and the claims asserted therein, preferred embodiments of the invention will be demonstrated below. The descriptions about well-known components, related materials, and associated processing techniques will be omitted to avoid obscuring the content of the invention.

### Preparation of the foamable compositions for foamed thermoplastic polyurethanes

The foamable compositions for preparing foamed thermoplastic polyurethanes of the present invention mainly comprise non-foamed thermoplastic polyurethane particles and a foaming agent. The viscosity of the non-foamed thermoplastic polyurethane particles of the composition is between 10,000 poise and 40,000 poise, which facilitates preliminary foamed particles to proceed with a second foaming well. The viscosity is measured at 170°C according to JISK 7311 test method. Preferably, the viscosity of the non-foamed thermoplastic polyurethane particles is between 15,000 poise and 35,000 poise, which enhanced both the second foaming ability of the preliminary foamed particles and the mechanical strength of the re-foamed materials. The content of the foaming agent is preferably 5 to 25 parts by weight, based on 100 parts by weight of the non-foamed thermoplastic polyurethane particles, and more preferably 5 to 20 parts by weight if better mechanical strength is needed. According to the embodiments of the present invention, the non-foamed thermoplastic polyurethane particles of the composition preferably have a particle size between 2.5 mm (millimeter) and 4.5 mm. As described herein, particle size is referred to the measurements of the longest axes of the particles. According to other embodiments of the present invention, the non-foamed thermoplastic polyurethane particles of the composition preferably have a hardness of 40 Shore A scale to 64 Shore D scale. According to still other embodiments of the present invention, the non-foamed thermoplastic polyurethane particles of the composition preferably have a density between 1.0 g/cm³ and 1.25 g/cm³. The density as referred to herein is measured according to the Archimedes principle (buoyancy method).

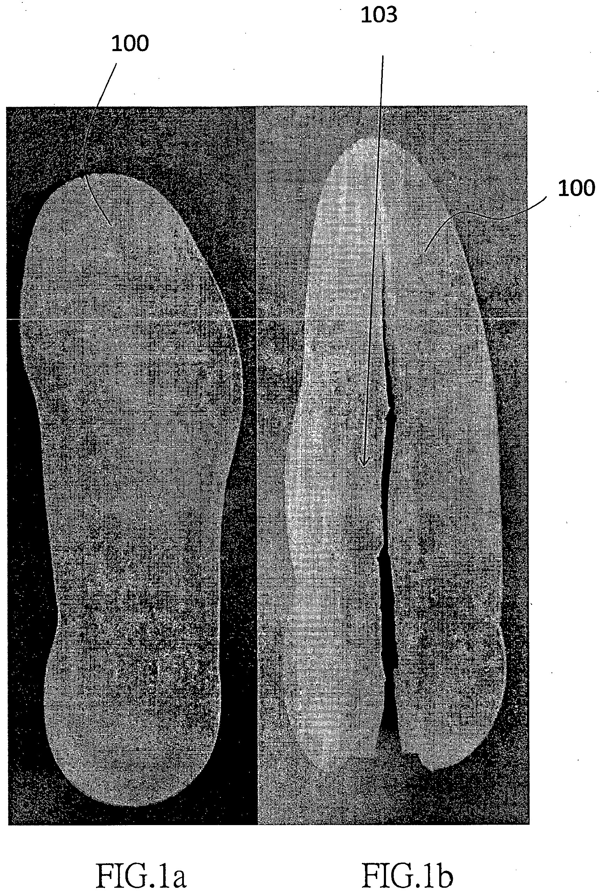

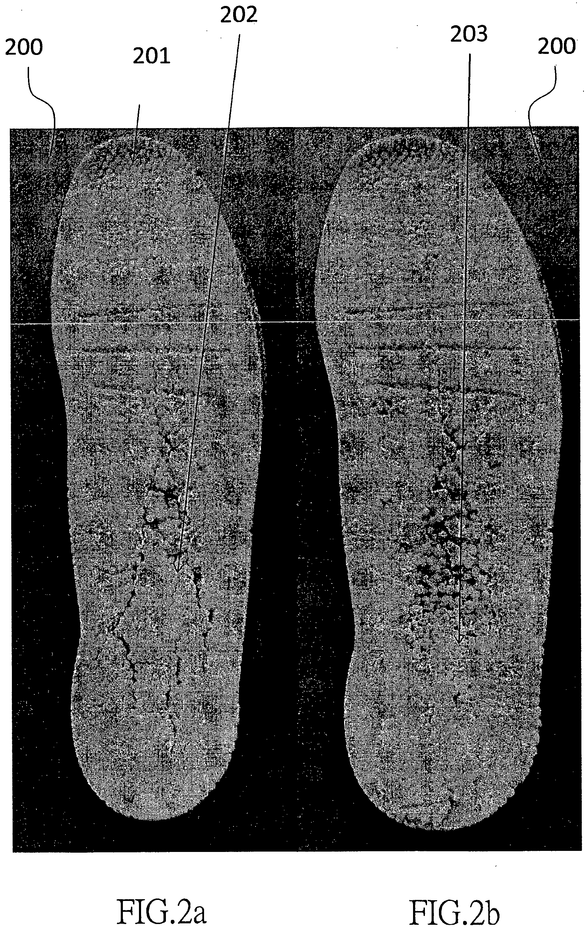

The foamed thermoplastic polyurethanes of the present invention have a good re-foaming property. The so-called "re-foaming" property means that the foamed thermoplastic polyurethane formed through the preliminary foaming can be foamed again (for the second time), especially by the treatment of microwave. After the re-foaming, the particles of such kind of foamed thermoplastic polyurethane expand significantly and bond closely to form a foamed, molded article exhibiting a full shape, which represents a good re-foaming. On the contrary, for the foamed thermoplastic polyurethanes prepared from the non-foamed thermoplastic polyurethane particles having a viscosity outside the range as described above, they fail to expand significantly after the treatment of microwave. In addition, they formed a collapsed structure due to the lack of bonding between most of the particles, and failed to form the microwave molded article with a full shape appearance. This represents a bad re-foaming. For example, Figs. 1a-1b show the microwave molded article 100 prepared from the non-foamed thermoplastic polyurethane particles having a viscosity in the range described above (well re-foamed); and Figs. 2a-2b show the failed, microwave molded article 200 prepared from non-foamed thermoplastic polyurethane particles having a viscosity outside the runge (badly re-foamed). Fig. 1 a shows the overall appearance of the microwave molded article 100 having a full shape, and Fig. 1b shows the internal structure of the microwave molded article 100 being cut by external force intentionally. Fig. 2a shows the overall appearance of the microwave molded article 200, and Fig. 2b shows the internal structure of the microwave molded article 200 torn by external force intentionally. By comparison, it can be observed that Figs 2a and 2b show totally different results, such as the subsidence region 201 and the inter-particle non-bonding region 202 of the microwave molded article 200. Fig. 1b shows the continuous distribution phase 103, where the particles in the internal structure bond closely and have no clear boundaries. By contrast, Fig. 2b shows the non-continuous distribution phase 203 resulted from the loose particles in the internal structure. In fig. 2b, the particles in some regions visually seemed bonding with each other, but peeled loosely upon a slight stir, wherein each particle keeps its own complete shape and the particles internally have clear boundaries from each other.

The non-foamed thermoplastic polyurethane particles of the foamable composition can be esters, ethers, polycaprolactones, or polycarbonates. As to the preparation of the non-foamed thermoplastic polyurethane particles, for example, diisocyanate, polyester polyol, the chain extender, the catalysts and other additives can be mixed to react at about 200-300 °C and then subjected to the injection molding or extrusion treatment known in the art to obtain non-foamed thermoplastic polyurethane particles. Diisocyanate can be selected from 4,4-methylene bis(phenyl isocyanate) (MDI), m-xylylene diisocyanate (XDI), 1,4-phenylene diisocyanate, 1,5-naphthalene diisocyanate, toluene diisocyanate (TDI), isophorone diisocyanate (IPDI), hexamethylene diisocyanate (HDI) and dicyclohexylmethane-4,4-diisocyanate. MDI or TDI is preferable. Polyester polyol is polyester formed from dibasic acid and diol. The diol can have 2 to 10 carbon atoms, and the dibasic acid can be a straight or brunched chain having 4 to 12 carbon atoms. Preferably, the polyester polyol is 1,4-butylene adipate. The chain extender is a diol having 2 to 12 carbon atoms; such as ethylene glycol, diethylene glycol, propylene glycol, dipropylene glycol, 1,4-butanediol, 1,6-hexanediol, 1,3-butylene glycol, 1,5-pentanediol, 1,4-cyclohexane dimethanol, neopentyl glycol, benzene diol, xylene glycol, or a combination thereof. The catalyst can be selected from triethylamine, dimethyl cyclohexylamine, stannous dioctoate, dibutyltin dioctoate, dibutyltin dilaurate, dibutyltin diacetate, and a combination thereof. Injection molding or extrusion processes can use various additives, such as pigments, fillers, antioxidants, reinforcing agents, lubricants, plasticizers, or the like.

The foaming agent in the foamable composition can be an organic foaming agent or an inorganic foaming agent. Examples of the organic foaming agents can be, for example, azo compounds (such as azodicarboxylic amide, azobisisobutyronitrile, diisopropyl azodicarboxylate), sulfonamide compounds (such as 4,4-oxybis benzene sulfonyl hydrazine, p-benzene sulfonyl hydrazine, 1,4-xylylene sulfonyl hydrazide), nitroso compounds (such as dinitroso terephthalic amide, N,N'-dinitroso pentamethylene tetramine), carbon dioxide (CO₂), hydrocarbons having 4 to 10 carbon atoms (such as n-pentane, isopentane and cyclopentane), or expandable microspheres (such as inflatable microcapsules, micro spherical foam powders). More preferably, the foaming agent is expandable microspheres, carbon dioxide (CO₂) or hydrocarbons having 4 to 10 carbon atoms.

In addition to the non-foamed thermoplastic polyurethane particles and the foaming agent, the foamable composition for preparing the foamed thermoplastic polyurethanes of the present invention can comprise the inorganic filler and the plasticizer as needed. The inorganic filler is, for example, talc powder, mica powder, sodium thiosulfate, or the like being used as the mold release agent. Preferably, the inorganic filler is talc powder. According to various embodiments, based on 100 parts by weight of the non-foamed thermoplastic polyurethane particles, there is preferably 0.1 to 5 parts by weight of talc powder. The plasticizer can be benzoic acid compounds (e.g., benzoates, such as methyl benzoate, ethyl benzoate, dipropylene glycol dibenzoate, etc., and derivatives thereof), esters (such aa triethyl citrate, trimethyl citrate, acetyl triethyl citrate, and derivatives thereof), ethers (such as adipic acid ether ester, glycol butyl ether ester, and derivatives thereof), polycaprolactones (such as polycaprolactone diol, and derivatives thereof), or polycarbonates (such as methyl polycarbonate, phenyl polycarbonate, and derivatives thereof). Benzoate or a derivative thereof is preferred. According to various embodiments, based on 100 parts by weight of the non-foamed thermoplastic polyurethane particles, there is preferably 1 to 20 parts by weight of the plasticizer.

In a preferred embodiment, the foamable composition for preparing the foamed thermoplastic polyurethane of the present invention has the following formulation: 100 parts by weight of the non-foamed thermoplastic polyurethane particles; 0.1 to 5 parts by weight of talc powder; 1 to 20 parts by weight of the plasticizer; and 5 to 25 parts by weight of the foaming agent, in which the non-foamed thermoplastic polyurethane particles have a viscosity from 10,000 poise to 40,000 poise measured at 170°C according to JISK 7311 test method. If both talc powder and the plasticizer are needed, the formulation described above facilitates the formation of foamed thermoplastic polyurethanes having uniform pore size and particle size.

In addition, a variety of pigment powders can be added to the foamable composition. According to various embodiments, based on 100 parts by weight of the non-foamed thermoplastic polyurethane particles, there is preferably 0.1 to 5 parts by weight of pigment powders.

### Method of preparing foamed thermoplastic polyurethanes

The method of preparing foamed thermoplastic polyurethanes through foaming and pelletizing will be illustrated by way of example below. First, the foamable composition having the formulation described above (comprising the non-foamed thermoplastic polyurethane particles and the foaming agent, or optionally added inorganic fillers, plasticizers, pigments, etc.) is poured into a single-screw pelletizer for foaming and pelletizing. The single-screw pelletizer has a die head temperature from 100 °C to 200 °C, an extrusion speed from 50 kg/h to 70 kg/h, a die head pressure from 35 kgf/cm² to 65 kgf/cm², and an underwater pelletizing temperature from 10 °C to 20 °C. Preferably, the die head temperature of the single-screw pelletizer is rom 135 °C to 175 °C. The foaming and pelletizing method described above or other suitable methods can be used to prepare the foamed thermoplastic polyurethanes. It is noted that if the extrusion speed is too low, the particles would be excessively foamed (called screw-induced over foaming), leading to failure of microwave re-foaming.

The foamed thermoplastic polyurethane particles, each single particle having a plurality of colors, can be prepared in reference to the method described above. For example, a variety of foamable compositions, each composition containing a single color pigment, such as a first foamable composition containing a black pigment and a second foamable composition containing a red pigment, can be prepared first. Afterwards, the first foamable composition is added portion-wise into the single-screw pelletizer, during which a portion of the second foamable composition is added between any two portion-wise additions of the first foamable composition. In this way, the foamed thermoplastic polyurethanes having a variety of colors in each single particle can be formulated.

### Foamed thermoplastic polyurethanes

The foamed thermoplastic polyurethanes of the present invention can be produced according to the foamable composition and the method thereof, but is not limited thereto. Preferably, the foamed thermoplastic polyurethanes of the present invention have a re-foaming property, i.e., the foamed thermoplastic polyurethanes of the present invention can be re-foamed by the treatment of microwave or other suitable methods to obtain a lower density. Specifically, in the preferred embodiments, the present invention provides the foamed thermoplastic polyurethanes having a density in the range of 0.2 g/cm³ to 0.8 g/cm³. The foamed thermoplastic polyurethanes are treated by microwave to re-foam and obtain a density in the range of 0.15 g/cm³ to 0.6 g/cm³, which is lower than the density before the microwave treatment. As described herein, the process of forming the foamed thermoplastic polyurethanes through the foaming and pelletizing of the foamable composition is referred to as the first foaming stage, and the process for the re-foaming of the foamed thermoplastic polyurethanes resulted from the first foaming stage is called the second foaming stage. In one preferred embodiment, the foamed thermoplastic polyurethanes formed at the first foaming stage have residual active foaming agent, but the present invention is not limited thereto. The re-foaming ability of the foamed thermoplastic polyurethanes might be enhanced by the residual active foaming agent, the level of which might be controlled by adjusting the formulation of the foamable composition or controlling the processes of the foaming and pelletizing. According to some embodiments of the present invention, the foamed thermoplastic polyurethanes formed at the first foaming stage preferably have a particle size from 3 mm to 7.5 mm. According to other embodiments of the present invention, the foamed thermoplastic polyurethanes formed at the first foaming stage preferably have a hardness of 40 Shore C scale to 80 Shore C scale. According to still other embodiments of the present invention, the foamed thermoplastic polyurethanes formed at the first foaming stage preferably have a density from 0.2 g/cm³ to 0.8 g/cm³. The foamed thermoplastic polyurethanes formed at the first foaming stage can have a variety of shapes, such as spherical, flaky, non-spherical, irregular shaped and the like.

### Microwave molded article and the method thereof

The microwave molded article of the present invention is formed at the second foaming stage using microwave treatment. The foamed materials treated by microwave have pores that are more uniform and fine than that of the foamed thermoplastic polyurethanes not treated by microwave, and thus have the advantage of light weight. In addition, microwave treatment also makes the surfaces of the particles of the foamed thermoplastic polyurethanes bond with each other, and thus produces the microwave molded article. According to various embodiments, the microwave molded article prepared by the present invention can preferably have the following properties: a preferable hardness of 40 Shore C scale to 80 Shore C scale; and a preferable density of 0.15 g/cm³ to 0.6 g/cm³.

In accordance with various embodiments, the microwave molded article of the present invention can be prepared as follows: an appropriate amount of the foamed thermoplastic polyurethanes formed at the first foaming stage is put in a container, and then irradiated with microwave. The container can be a variety of molds, such as ceramic molds, plastic molds, glass molds, or composite molds made from metals and plastics, wherein the preferred one is composite molds made from metals and plastics. In the microwave foaming process, the power of the microwave is preferably from 500 watts (W) to 30,000 W, and more preferably from 1,000 W to 25,000 W at frequency for microwave 2,450 MHz (the frequency is applied to all embodiments of the present invention), and the duration of microwave is from 3 seconds to 300 seconds, and more preferably from 5 seconds to 120 seconds. According to certain embodiments, no water is needed to add during the treatment of microwave. In some embodiments, water or alcohols can be added as the microwave medium during the treatment of microwave. In these embodiments, based on 100 parts by weight of the foamed thermoplastic polyurethanes, the medium is used in an amount of 1 part by weight to 10 parts by weight. The medium can be a polar medium, such as alcohols, including primary alcohols (e.g., methanol or ethanol) and secondary alcohols (e.g., ethylene glycol or propylene glycol), but is not limited thereto. Adding an additive that absorbs microwave, like water or alcohol, during the treatment of microwave has advantage in increasing the foam uniformity of the microwave molded article, but that is not a necessity, especially in the case that the foam uniformity is enough.

In summary, the thermoplastic polyurethane foam having all the advantages of light weight (high foaming ratio), stable quality, uniform distribution of pores, etc. can be produced by providing the foamable composition having suitable formulation and performing the first foaming stage and pelletizing process and the second stage microwave foaming process sequentially.

Various examples will be set forth below to illustrate the detailed description of the present invention in detail. The benefits and efficacy achieved by the present invention can be readily understood by those skilled in the art from the content of the specification, and various modifications and changes can be made by practicing and applying the contents of the present invention without departing from the spirit of the invention.

### The first stage pelleting and foaming: Examples 1 a to 8a and Comparative Examples 1 a to 5a

Example 1 a: 100 parts by weight of non-foamed thermoplastic polyurethane particles (trade name: Sunko-85A (M7851 MV7), having a hardness of 87 Shore A scale, available from Sunko Ink Co., Ltd.), 0.5 part by weight of talc powder, 1 part by weight of methyl benzoate (being the plasticizer), and 5 parts by weight of expandable microspheres (trade name: Expancel 930DU-120, available from Matsumoto, being the foaming agent) are mixed uniformly and poured into the single-screw pelletizer, which performs the first foaming stage and pelletizing process to obtain the preliminary foamed thermoplastic polyurethanes. The single-screw pelletizer is operated under the following conditions: a material extrusion speed of 70 kg/h, a die head pressure of 55 kgf/cm², a die head temperature of 155 °C, and an underwater pelletizing temperature of 20 °C. The preliminary foamed thermoplastic polyurethane has a density of 0.45 g/cm³ and is grunular.

The preparation method of Examples 2a to 8a and Comparative Examples 1 a to 5a may refer to that of Example 1 a. The preparation conditions of Examples 1a to 8a are listed in Table 1. The preparation conditions of Comparative Examples 1 a to 5a are listed in Table 3.

### The second stage microwave foaming: Examples 1 b to 8b and Comparative Examples 1 b to 5b

Example 1 b: 50 parts by weight of the foamed thermoplastic polyurethane (named as 1 a) obtained in Example 1 a described above and 5 parts by weight of water are placed in a mold, which has a length of 25 cm, a width of 10 cm, and a height of 1.2 cm. Afterwards, the second stage microwave foaming process is performed using a microwave power of 500 W at frequency for microwave 2,450 MHz and a microwave duration of 180 seconds. After the mold is cooled down to 20 °C, the preparation of the thermoplastic polyurethane microwave molded article 100 (shown in Figs. 1a and 1b) is obtained, and the microwave molded article 100 has a density of 0.33 g/cm³.

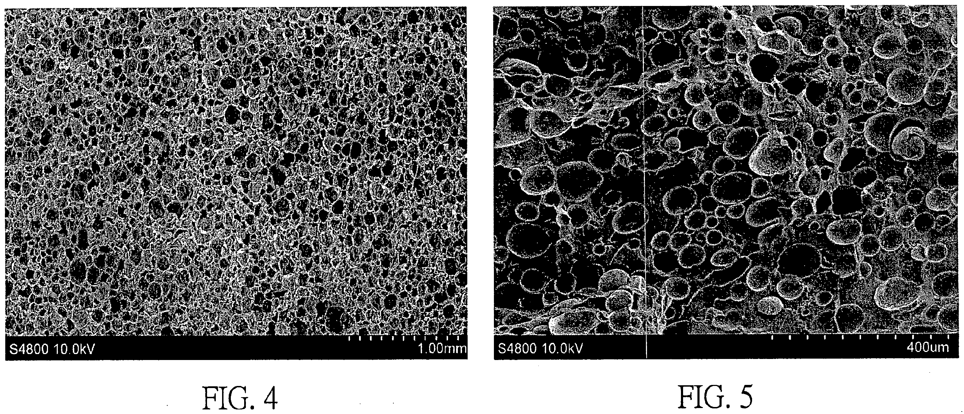

The preparation method of Examples 2b to 8b and Comparative Examples 1 b to 5b may refer to that of Example 1 b. The preparation conditions of Examples 1 b to 8b are listed in Table 2. The preparation conditions of Comparative Examples 1 b to 5b are listed in Table 4. Fig. 4 shows the scanning electron microscope (SEM) image of the microwave-foamed, molded article of Example 5b taken along the thickness direction from the outer surface to the inner layer.

### Analysis and discussion of Examples and Comparative Examples

### Examples 3a/3b and Comparative Examples 1a/1b (excess talc powder)

The preparation condition of Comparative Example 1 a is the same as that of Example 3a, except that the amount of talc powder is 10 parts by weight in Comparative Example 1 a. Since the amount of talc powder in Comparative Example 1 a is excess, the particles in the single-screw pelletizer slipped due to the lower friction, resulting in failure of pelletizing. Comparative Example 1 a is unable to obtain the required thermoplastic polyurethane foam particles (Comparative Example 1 a is shown failed in Table 3), and thus the second stage microwave foaming process cannot proceed with (Comparative Example 1 b is shown none in Table 4).

### Examples 3a/3b and Comparative Examples 2a/2b (excess plasticizer)

The preparation condition of Comparative Example 2a is the same as that of Example 3a, except that the amount of the plasticizer is 25 parts by weight in Comparative Example 2a. Since the amount of the plasticizer in Comparative Example 2a is excess, the thermoplastic polyurethane foam particles in the single-screw pelletizer slipped due to the lower friction, resulting in failure of pelletizing. Comparative Example 2a is unable to obtain the required thermoplastic polyurethane foam particles (Comparative Example 2a is shown failed in Table 3), and thus the second stage microwave foaming process cannot proceed with (Comparative Example 2b is shown none in Table 4).

### Examples 7a/7b and Comparative Examples 3a/3b (excessively high viscosity)

The preparation condition of Comparative Example 3a is the same as that of Example 7a, except that the viscosities of the non-foamed thermoplastic polyurethane particles are different. The viscosity of non-foamed particles in Comparative Example 3a is excessively high. Although the foamed thermoplastic polyurethane (with a density of 0.85 g/cm³) is successfully obtained in Comparative Example 3a, the particles fail to re-expand significantly after the treatment of microwave. In addition, after the treatment of microwave the particles collapse due to the lack of bonding between most of the particles and form a failed microwave molded article 200 without a full shape appearunce (Comparative Example 3b is shown failed in Table 4). The failed microwave molded article 200 is shown in Figs. 2a and 2b.

### Examples 8a/8b and Comparative Examples 4a/4b (screw-induced over foaming)

The preparation condition of Comparative Example 4a is the same as that of Example 8a, except that there is screw-induced over foaming in Comparative Example 4a (too slow extrusion speed). Although the foamed thermoplastic polyurethane (with a density of 0.17 g/cm³) is successfully obtained in Comparative Example 4a, the particles fail to re-expand significantly after the treatment of microwave. In addition, after the treatment of microwave the particles collapse due to the lack of bonding between most of the particles, and form a failed microwave molded article 300 without a full shape appearance

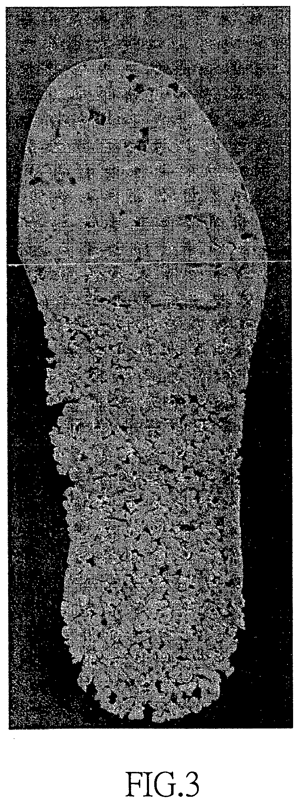

### (Comparative Example 4b is shown failed in Table 4 and also shown in Fig. 3.)

### Examples 8a/8b and Comparative Examples 5a/5b (insufficient amount of foaming agent)

The preparation condition of Comparative Example 5a is the same as that of Example 8a, except that the amount of foaming agent is insufficient in Comparative Example 5a. Although the foamed thermoplastic polyurethane (having a density of 0.85 g/cm³) is successfully obtained in Comparative Example 5a, the particles fail to re-expand significantly after the treatment of microwave. In addition, after the treatment of microwave the particles collapse due to the lack of bonding between most of the particles, and the failed microwave molded article 300 without a full shape appearunce is formed (Comparative Example 5b is shown failed in Table 4). Fig. 5 shows the scanning electron microscope (SEM) image of the failed microwave-foamed, molded article 300 taken along the thickness direction from the outer surface to the inner layer.

### A single particle of the foamed thermoplastic polyurethane having a plurality of colors

### Example 9: Bicolor foamed thermoplastic polyurethane

100 parts by weight of thermoplastic polyurethane particles (trade name: Sunko-85A (M7851 MV7), having a hardness of 87 Shore A scale, available from Sunko Ink Co., Ltd.), 0.5 part by weight of talc powder, 1 part by weight of methyl benzoate (being the plasticizer), 0.5 part by weight of black pigment powder, and 5 parts by weight of expandable microspheres (trade name: Expancel 930DU-120, available from Matsumoto, being the foaming agent) are mixed uniformly and named as Raw material A. Besides, 100 parts by weight of Sunko-85A (M7851 MV7), 0.5 part by weight of talc powder, 1 part by weight of methyl benzoate, 0.5 part by weight of white pigment powder, and 5 parts by weight of expandable microspheres are mixed uniformly and named as Raw material B. Raw material A is divided into several small portions. So does Raw material B. Each small portion A and B are poured by turns into the single-screw pelletizer, which performs the first foaming stage and pelletizing process to obtain the foamed thermoplastic polyurethanes particles, each is chequered (alternately colored) with black and white. The single-screw pelletizer operated under the following conditions: a material extrusion speed of 70 kg/h, a die head pressure of 55 kgf/cm², a die head temperature of 155 °C, and an underwater pelletizing temperature of 20 °C. The foamed thermoplastic polyurethane has a density of 0.44 g/cm³.

### Microwave molded article having a surface with a designed pattern

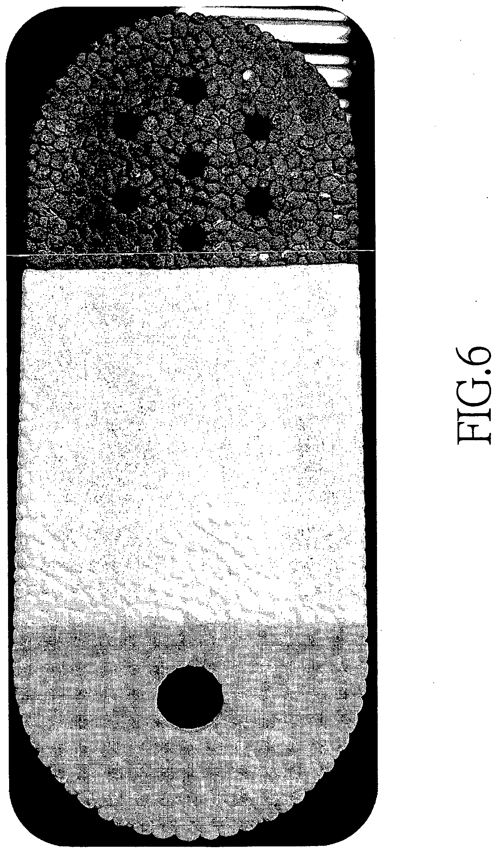

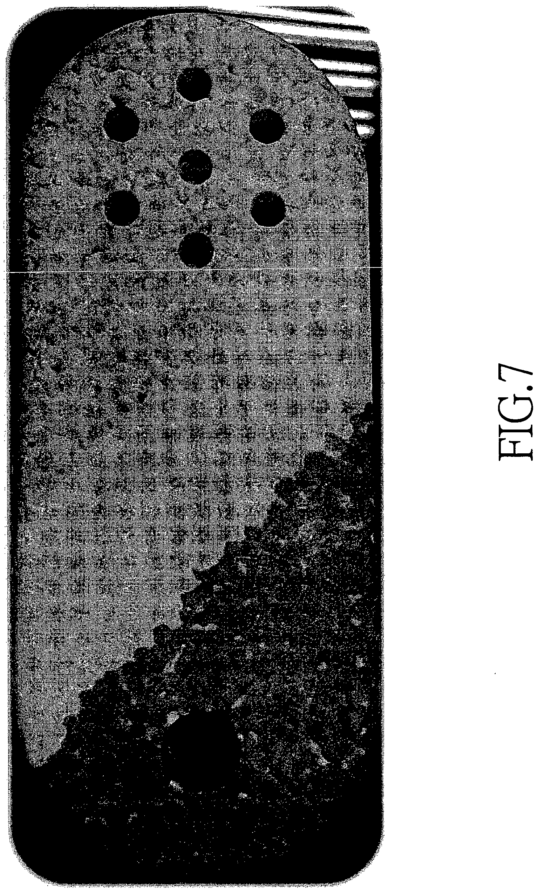

In reference to the above described methods, a microwave molded article with a designed pattern as shown in Fig.6 is made by purposely arrunging colorful particles of the foamed thermoplastic polyurethane within a mold, in light of the pre-sketched designed pattern. In accordance with another embodiment of the present invention, a photo as Fig.7 shows a shoe insole which is also a microwave molded article having a designed pattern with different colors.

Tables 1 to 4

| Table 1 | | | | | | | | | |
|---|---|---|---|---|---|---|---|---|---|
| The first foaming stage and pelletizing | | Ex. 1a | Ex. 2a | Ex. 3a | Ex. 4a | Ex. 5a | Ex.6a | Ex. 7a | Ex. 8a |
| Non-foam ed TPU | wt.% | 100 | 100 | 100 | 100 | 100 | 100 | 100 | 100 |
| | Trade name | SUNKO-85 A | SUNKO-95A | SUNKO-70A | SUNKO-70A | SUNKO-40A | SUNKO-85A | SUNKO-85A | SUNKO-65A |
| | | M7851 MV 7 | HA1095MV | T1705LVM | T1705LVM | T945PLM2 | M7851MV7 | M7851MV7 | M165VM |
| | Shore hardness | 87A | 95A | 70A | 70A | 40A | 87A | 87A | 67A |
| | Viscosity (poise) | 25,000 | 28,000 | 17,500 | 17,500 | 10,000 | 25,000 | 25,000 | 15,000 |
| | Density (g/cm³) | 1.15 | 1.17 | 1.14 | 1.14 | 1.12 | 1.15 | 1.15 | 1.13 |
| | Particle diameter(mm) | 3.0 | 3.0 | 3.5 | 3.5 | 4.0 | 3.0 | 3.0 | 3.5 |
| Talc powder | wt.% | 0.5 | 0.5 | 5.0 | 5.0 | 0.1 | 0.5 | 0.5 | 0.5 |
| Methyl benzoate | wt.% | 1 | 20 | 5.0 | 5.0 | 5 | 1 | 1 | 1 |
| Foaming agent | Type | Expandable microspheres 930DU-120 | Calcium carbonate | Expandable microspheres 930MB-120 | Expandable microspheres 930MB-120 | Expandable microspheres 930DU-120 | Expandable microspheres 930DU-120 | Expandable microspheres 930DU-120 | Expandable microspheres 930DU-120 |
| | wt.% | 5 | 10 | 25 | 25 | 20 | 25 | 5 | 7 |
| Screw condition | | no over foaming | no over foaming | no over foaming | no over foaming | no over foaming | no over foaming | no over foaming | no over foaming |
| Extrusion speed | kg/h | 70 | 70 | 50 | 50 | 50 | 70 | 70 | 50 |
| Die head pressure | kgf/cm² | 55 | 65 | 35 | 35 | 45 | 55 | 55 | 40 |
| Die head temp. | °C | 155 | 175 | 135 | 135 | 140 | 155 | 155 | 155 |
| Underwater pelletizing temp. | °C | 20 | 20 | 10 | 10 | 20 | 20 | 20 | 20 |
| Preliminary foamed TPU | Name | 1a | 2a | 3a | 4a | 5a | 6a | 7a | 8a |
| | Shore hardness | 73C | 75C | 68C | 68C | 43C | 70C | 73C | 65C |
| | Density (g/cm³) | 0.45 | 0.65 | 0.40 | 0.40 | 0.23 | 0.37 | 0.45 | 0.35 |
| | Particle diameter (mm) | 5.5 | 3.0 | 4.0 | 4.0 | 7.0 | 6.0 | 5.5 | 6.0 |

| Table 2 | | | | | | | | | |
|---|---|---|---|---|---|---|---|---|---|
| The second stage microwave foaming | | Ex. 1b | Ex. 2b | Ex. 3b | Ex. 4b | Ex. 5b | Ex. 6b | Ex. 7b | Ex. 8b |
| Preliminary foamed TPU | Name | 1a | 2a | 3a | 4a | 5a | 6a | 7a | 8a |
| | wt.% | 50 | 50 | 50 | 50 | 50 | 50 | 50 | 50 |
| Medium | Type | Water | Water | Water | Alcohol* | Water | Water | None | None |
| | wt.% | 5 | 5 | 5 | 5 | 5 | 5 | 0 | 0 |
| Microwave power | W | 500 | 800 | 300 | 300 | 1000 | 500 | 5000 | 5000 |
| Microwave duration | sec | 180 | 180 | 30 | 30 | 20 | 180 | 60 | 50 |
| Microwave molded article | Shore hardness | 65C | 70C | 60C | 60C | 40C | 60C | 65C | 58C |
| | Density (g/cm³) | 0.33 | 0.48 | 0.25 | 0.26 | 0.17 | 0.20 | 0.34 | 0.30 |
| *Methanol/Ethylene glycol = 9/1 | | | | | | | | | |

### Microwave molded articles having hardness variation by only once microwave irradiation

### Example 10 Sections having different hardness

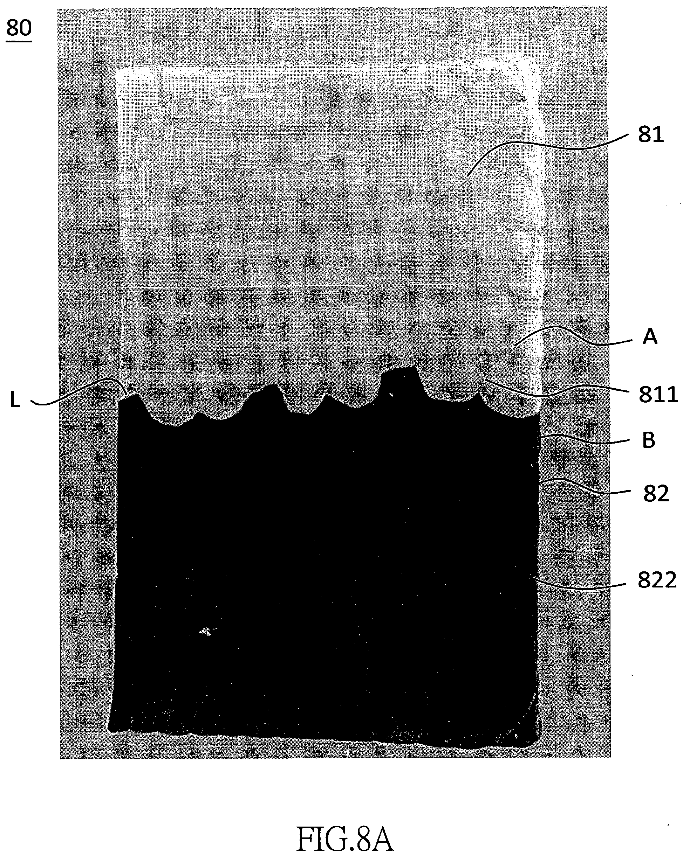

A plurality of foamed particles A and B (foamed thermoplastic polyurethanes) having different hardness are provided. 30 parts by weight of the foamed particles A (Example 1 a, having a hardness 73 Shore C (also called 73C) are collected together and put into the left half of the mold, and then 30 parts by weight of the foamed particles B (having a hardness of 68C)are collected together and put into the right half of the mold. Afterwards, the mold is transferred into a microwave, which is set at a power of 600 W and run for 90 seconds. After the mold is cooled down, the molded foam 80 having different hardness on both sides is obtained, in which the plurality of foamed particles A aggregate to form section 81, and the plurality of foamed particles B aggregate to form the other section 82, as shown in Fig. 8A. The microwave molded foam 80 has a rugged surface, which remains the spherical lines 811 and 822 of the foamed particles A and B (i.e., there is an outline keeping a portion of the shape of the foamed particles A or foamed particles B as shown before microwave irradiation). The spherical lines 811 and 822 are not formed by the mold. The boundary L between two sections 81 and 82 is an irregular curve formed according to the distribution of the plurality of foamed particles A and the plurality of foamed particles B. Although the surface of the microwave molded article 80 of Example 10 has an outline that keeps a portion of the shape of the foamed particles A or foamed particles B as shown before microwave irradiation, the present invention is not limited thereto. In other examples, the present invention also comprises a microwave molded article that has different hardness sections but smooth surface, and does not keep a portion of the shape of the foamed particles as shown before microwave irradiation. The preparation of the foamed particles B might refer to Example 3a and has the following conditions: 100 parts by weight of non-foamed polyurethane particles (Sunko-40A, T1705LVM, Viscosity 17,500 poise, 170°C), 5 parts by weight of talc powder, 5 parts by weight of benzoate, 1 part by weight of blue pigment powder, 25 parts by weight of foaming agent 930MB120 , a extrusion speed of 50 kg/h, a die head pressure of 35 kgf/cm², a die head temperature of 135 °C, and an underwater pelletizing temperature of 10 °C. The resulting polyurethane foam particle has a density of 0.4 g/cm³.

### Example 11 Randomly distributed hardness

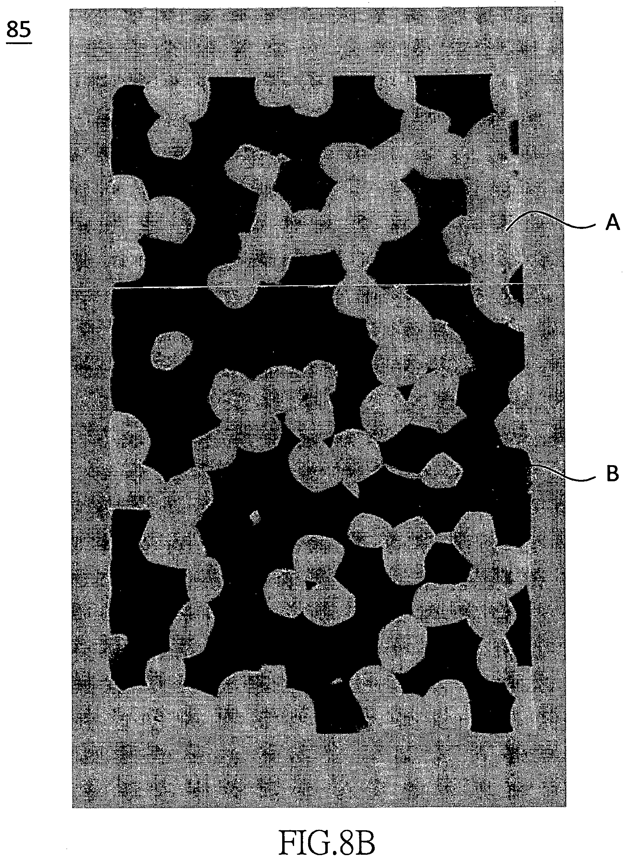

This microwave molded article is formed by randomly mixing foamed particles A and B having different hardness and then performing microwave irradiation. 30 parts by weight of the foamed particles A and 30 parts by weight of the foamed particles B are randomly dispersed and mixed and then put into the same mold as that used in Example 10. The microwave power is set at 600 W and run for 90 seconds. After the mold is cooled down, the molded foam 85 having randomly varied surface hardness is obtained, as shown in Fig. 8B.

### Microwave molded articles having hardness variation with repeated microwave irradiation

### Example 12 Two sections with different hardness having cut lines

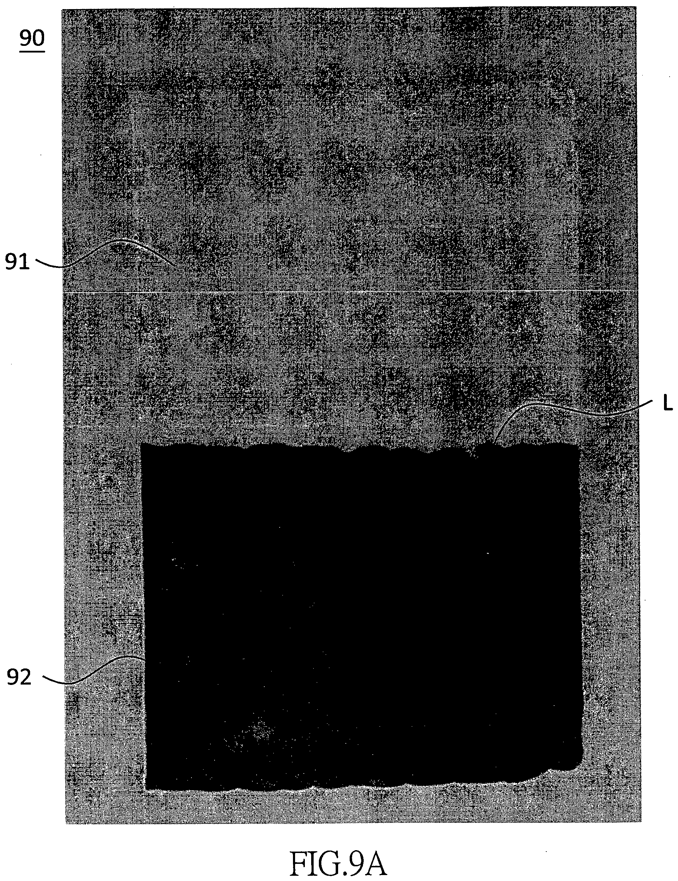

The microwave molded article 80 of Example 10 is cut to obtain the section 81 having only foamed particles A (which has been subject to once microwave irradiation). Then the cut section 81 is put into the same mold as that used in Example 10. 30 parts by weight of the foamed particles B is placed in the space besides the section 81 in the mold. Afterwards, the mold is transferred into a microwave, which is set at a power of 600 W and run for 90 seconds. After the mold is cooled down, the molded foam 90 is obtained as Fig. 9A. The microwave molded article 90 included the section 91 (a plurality of foamed particles A) and the section 92 (a plurality of foamed particles B) having different hardness. The boundary L is formed by cutting. Note that the section 91 has been subject to twice microwave irradiation, and the section 92 has been subject to once microwave irradiation only. It is noted that cutting is optional, and other examples of the present invention comprises using a section that has been subject to once microwave irradiation without cutting.

### Example 13 Three sections with different hardness having cut lines

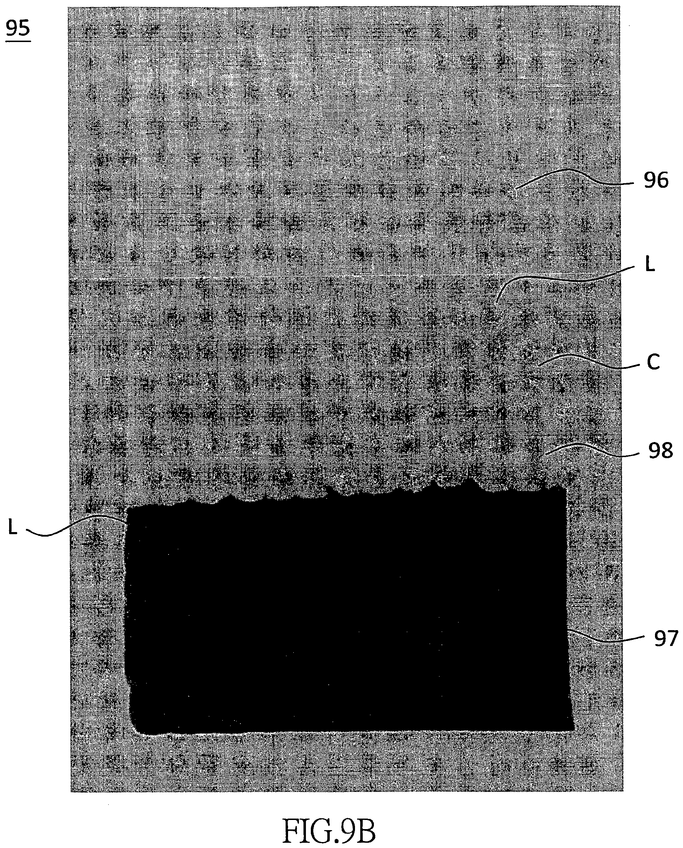

The section 81 having only foamed particles A (which has been subject to once microwave irradiation, 10 parts by weight) is cut from the microwave molded article 80 of Example 10 and put into the left half of the mold. Similarly, the section 82 having only foamed particles B (which has been subject to once microwave irradiation, 10 parts by weight) is cut from the microwave molded article 80 of Example 10 and put into the right half of the mold. The intermediate space between the section 81 and the section 82 is then filled with 40 parts by weight of foamed particles C. Afterwards, the mold is transferred into a microwave, which is set at a power of 600 W and run for 90 seconds. After the mold is cooled down, the microwave molded article 95 having three well-bonded sections with different hardness is obtained, as shown in Fig. 9B. The microwave molded article 95 included the section 96 (a plurality of foamed particles A), the section 97 (a plurality of foamed particles B), and the section 98 (a plurality of foamed particles C) having different hardness. The boundary L is formed by cutting. Note that the sections 96 and 97 have been subject to twice microwave irradiation, and the section 98 has been subject to once microwave irradiation only. The preparation of the foamed particles C (having a hardness 43C) might refer to Example 5a and has the following conditions: 100 parts by weight of non-foamed polyurethane particles (Sunko-40A, T945PLM2, Viscosity 10,000 poise, 170°C), 0.1 parts by weight of talc powder, 5 parts by weight of benzoate plasticizer, 0.5 part by weight of green florescence pigment powders, 20 parts by weight of 930DU120 foaming agent, a extrusion speed of 50 kg/h, a die head pressure of 45 kgf/cm², a die head temperature of 140 °C, and an underwater pelletizing temperature of 20 °C. The resulting foamed polyurethane has a density of 23 g/cm³).

### Microwave molded articles having flanges

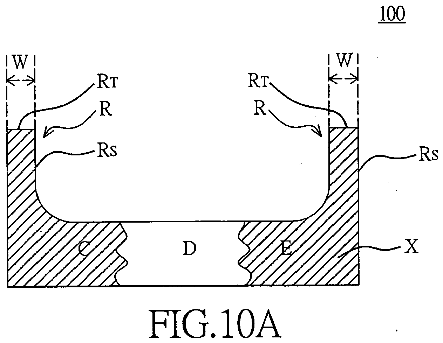

Fig. 10A is cross-sectional view of microwave molded article 100 having a flange of the present invention. The microwave molded article 100 might be prepared, for example, by placing a plurality of foamed particles C, a plurality of foamed particles D, and a plurality of foamed particles E in the mold and substantially filling the mold, which is then properly sealed to proceed with microwave irradiation. The foamed particles are formed thermoplastic polyurethanes. The microwave molded article 100 is characterized by having a bottom block X and a flange R, wherein the flange R is upwardly extended from the edge of the bottom block X, and the flange R includes a flange top R_{T} and a flange side wall Rs. In some embodiments, the flange R_{T} might have a width w of 100 micrometers to 1,000 micrometers from the top view. In some embodiments, the surface of the flange R (including the flange top R_{T} and the flange side wall Rs) of the microwave molded article 100 could be visually seen residual spherical lines (i.e., the outline that keeps a portion of the shape of the foamed particles before the microwave irradiation on the outer surface of the flange R including the flange top R_{T} and the flange side wall Rs) of the foamed particles, especially when the width w of the flange R is greater than the particle size of the foamed particles. In some embodiments, residual spherical line is visually unseen on the surface of the flange top R_{T} of the microwave molded article 100 (i.e., on the flange top R_{T} there is no outline that keeps a portion of the shape of the foamed particles as shown before the microwave irradiation), especially when the width w of the flange R is less than the particle size of the foamed particles, wherein ono example shows the residual spherical lines on the flange side wall Rs and another example shows no residual spherical lines on the flange side wall Rs. The width w of the flange top R_{T} depends on the groove size corresponding to the flange of the mold. In some embodiments, when the surface of the flange R is formed by substantially fully conforming to the groove of the mold, residual spherical lines of the foamed particles is visually unseen on the surface of the flange (including the flange top R_{T} and the flange side wall Rs) while on the other portion like the bottom block X the residual spherical lines of the foamed particles is visually seen. In some embodiments, when the surface of the flange R is formed by not substantially fully conforming to the groove of the mold, residual spherical lines of the foamed particles is visually unseen on the surface of the flange top R_{T} while on the other portion like the flange side wall Rs and the bottom block X the residual spherical lines of the foamed particles are visually seen.

### Example 14

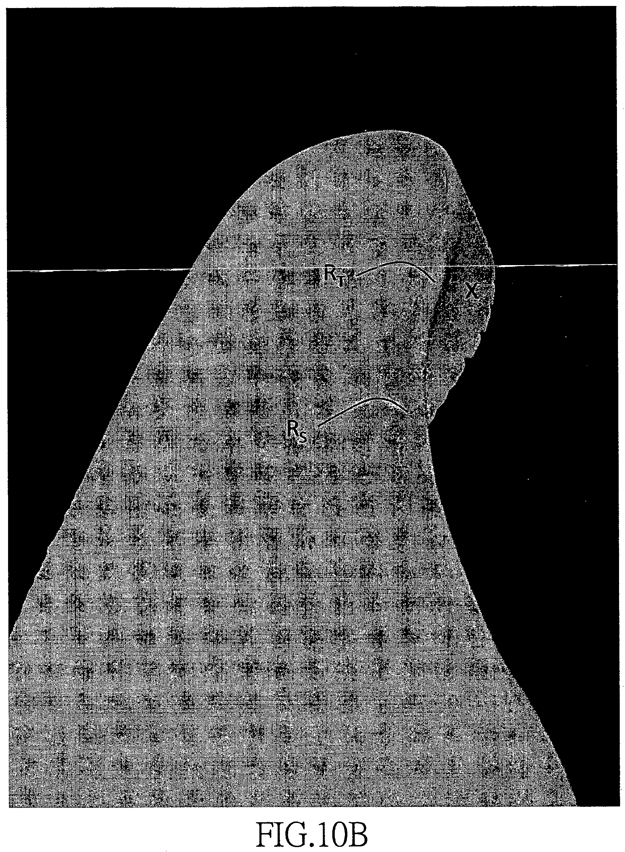

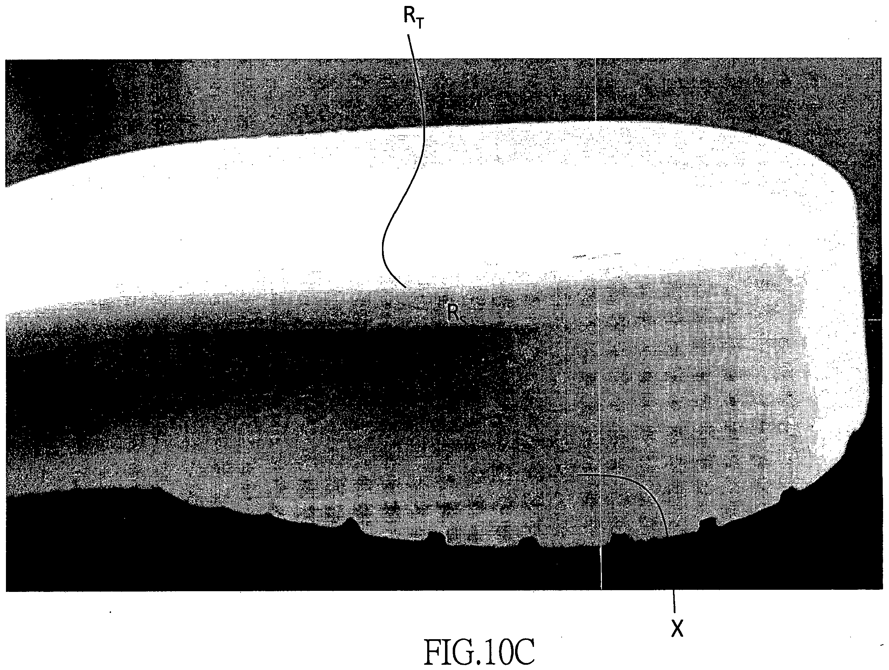

Put 60 parts by weight of the foamed particles B (having a particle size of 2.3 mm, i.e. 2,300 µm) in a suitable mold, and then the mold is transferred into a microwave, which is set at a power of 600 W and run for 90 seconds. After the mold is cooled down, a microwave molded article having a sharp flange R and a width w of 790 µm is obtained, as shown in Fig. 10B from the top view and Fig. 10C from the side view. As shown in figures, residual spherical lines of the foamed particles are visually unseen on the flange top R_{T} and the flange side wall Rs, but the other portions except the flange R has visually residual spherical lines of the foamed particles, for example, on the bottom block X.

### Microwave molded articles made from non-foamed thermoplastic polyurethane tubes

### Example 15

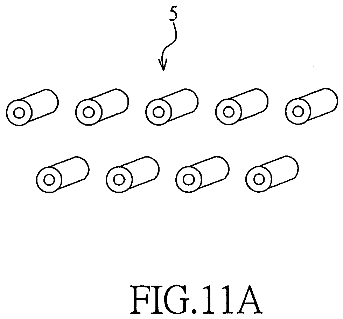

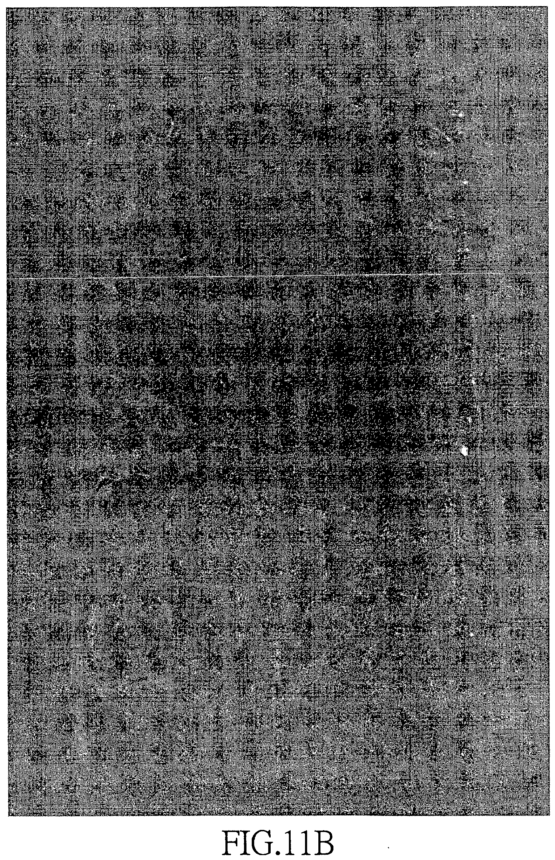

Unlike the Examples described above, non-foamed thermoplastic polyurethane particles are directly subject to microwave irradiation (without the pelleting and foaming process described above) in Example 15. Put 60 parts by weight of the non-foamed thermoplastic polyurethane particles (Sunko-65A, M165VM, which are tubular particles having openings on both ends, as shown in Fig. 11A) in a suitable mold. The microwave is set at a power of 550 W and run for 90 seconds. After the mold is cooled down, a tubular molded article of thermoplastic polyurethane is obtained, as shown in Fig. 11B.

### Microwave molded articles made from a composition of multiple plastic or rubber particles

A plurality of plastic or rubber particles, such as foamed thermoplastic polyurethane (like foamed particles A), Styrene Ethylene/Butylene Styrene rubber(SEBS), Poly methyl methacrylate (PMMA) particles, and silica gel particles, are dispersed and mixed in a mold to perform microwave irradiation.

### Example 16

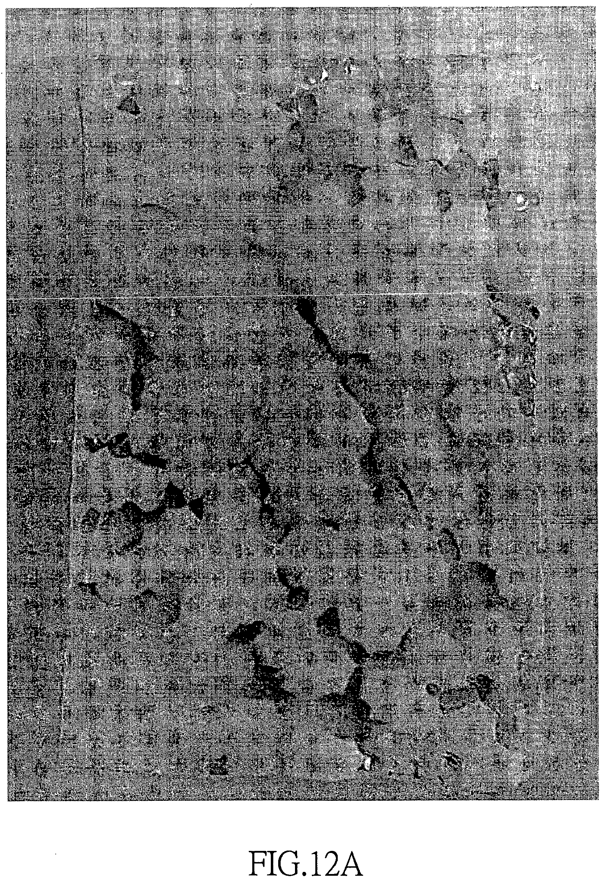

30 parts by weight of the foamed particles A and 30 parts by weight of PMMA particles (PMMA CM-207, available from Chi Mei Corporation) are randomly dispersed and mixed and then put into the same mold as that used in Example 10. The microwave power is set at 600 W and run for 90 seconds. After the mold is cooled down, the molded foam having randomly distributed and fused particles is obtained, as shown in Fig. 12A.

### Example 17

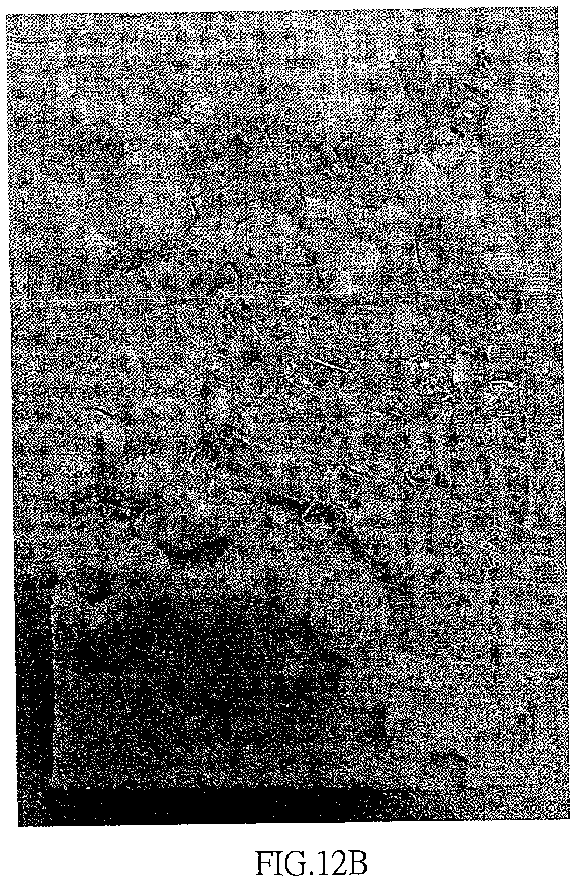

30 parts by weight of the foamed particles A and 30 parts by weight of SEBS particles (SEBS, S-545BK, U-Pellet) are randomly dispersed and mixed and then put into the same mold as that used in Example 10. The microwave power is set at 600 W and run for 70 seconds. After the mold is cooled down, the molded foam having randomly distributed and fused particles is obtained, as shown in Fig. 12B.

### Forming microwave molded articles by one-step microwave treatment

A method of manufacturing a microwave molded article would be set forth in the following examples. The method comprises providing a plurality of particles being dispersible, the plurality of particles comprising foamed thermoplastic polyurethane; providing an object having a surface portion being able to carry the plurality of particles; distributing the plurality of particles on the surface portion; and forming the microwave molded article by irradiating the object and the plurality of particles simultaneously with microwave to combine the object with the plurality of particles.

The object described above could be any object that is suitable to bond with foamed thermoplastic polyurethane by microwave irradiation. For example, the object could be any block made from the material that is suitable to produce the soles (outsole/midsole/insole). The material included, but is not limited to that selected from the group consisting of natural rubbers, synthetic rubbers, polyurethane (PU), ethylene-vinyl acetate (EVA) copolymers, polyvinyl chloride (PVC), polyethylene (PE) and the like. For example, the fabric that is suitable to make shoes included, but is not limited to that selected from the group consisting of animal skins, synthesis skins, natural fibers(like cotton or hemp), synthetic fibers (like nylon or polyester) and the like.

In some examples, the manufacturing method described above further comprises optionally forming an adhesive layer between the plurality of particles and the surface portion before the microwave irradiation step. In some examples, in the manufacturing method described above, the surface portion of the object comprises synthetic rubbers and the adhesive layer is heat-melting adhesive. In some examples, in the manufacturing method described above, the surface portion of the object comprises fabrics. In some examples, when the surface portion comprises a fabric containing nylon fibers, an adhesive layer like heat-melting adhesive is preferably applied between the particles and the surface portion. In some examples, when the surface portion comprises a fabric containing polyester fibers, the adhesive layer might be omitted. In some examples, in the method of manufacturing microwave molded article described above, the object is at least one portion of an outsole/midsole/insole of a shoe, and the plurality of particles constituted a portion of the shoe after the microwave irradiation step.

### Example 18

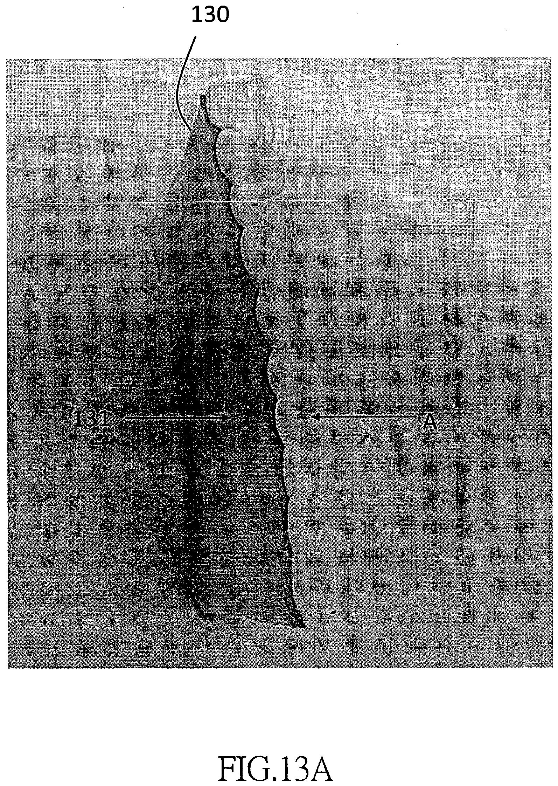

A plurality of particles that are dispersible is provided. The plurality of particles is foamed thermoplastic polyurethane (30 parts by weight of the foamed particles A). A rubber block (the object, Elastoplas@HRM8000, available from SUNKO)) having a surface portion is also provided. The surface portion could support a portion of the foamed particles A. The rubber block 131 is put at the bottom of the mold first and the surface portion is exposed. Then the surface portion is covered by the polyurethane heat-melting adhesive film made by pressing the polyurethane heat-melting gel particles (SUNKO-80A, A1080MV). Afterwards, the foamed particles A are placed on the heat-melting adhesive film (i.e. distributed on the surface portion of the rubber block 131). After the mold is covered, the microwave irradiation is carried out with microwave power set to 550 W and microwave duration of 70 seconds. After the mold is cooled down, a composite microwave molded article composed of a rubber block bonded with foamed polyurethane 130 is obtained, as shown in Fig. 13A.

The examples described above used the heat-melting adhesive film as the adhesive layer. In other examples, the heat-melting gel particles or glue (like SUNKO-80A, A1080MV) could be used by dispensing or coating before proceeding microwave treatment.

### Example 19

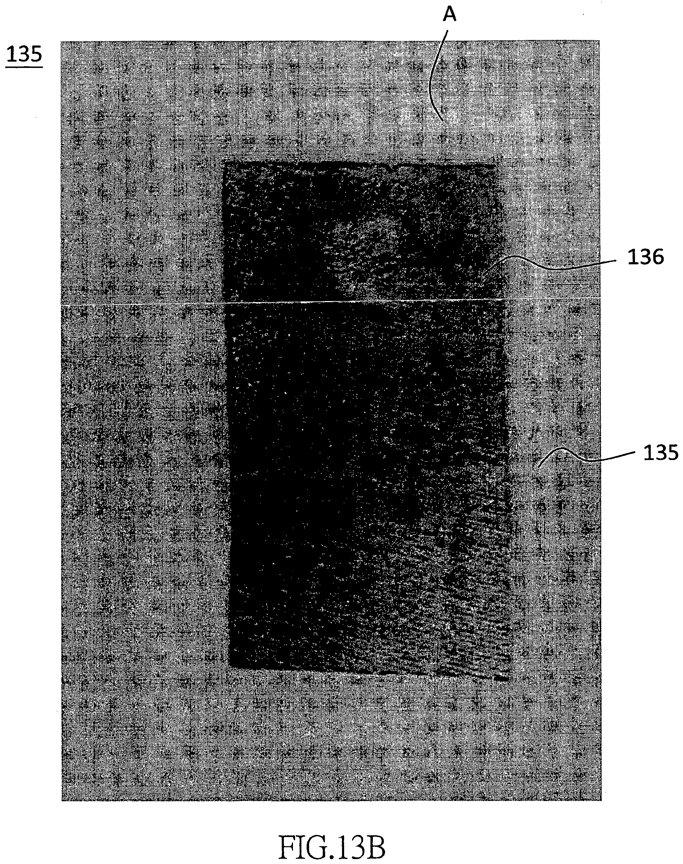

The process of Example 19 is the same as that of Example 18, except that a fabric made from cotton and polyester fiber complex, instead of the rubber block 131, is put at the bottom of the mold and no adhesive layer is applied. Afterwards, 60 parts by weight of the foamed particles A is poured into the mold, and then the mold is transferred into a microwave. The microwave is set at a power of 550 W and run for 90 seconds. After the mold is cooled down, a composite microwave molded article 135 composed of fabric 136 bonded with foamed polyurethane is obtained, as shown in Fig. 13B.

### Microwave molded article made from plastic or rubber particles with irregular shape

The shape of the plastic particles could change during the plastic pelleting, depending on the shape of the die head. For example, using a die head with a star shape could produce star-shaped particles. Microwave molding using star-shaped plastic particles could produce microwave molded articles having star-shaped lines on their surface, thereby enhancing the overall design sense of the products.

It is noted that those described above are merely demonstrations of preferred microwave molded articles, and the present invention still comprises the various microwave molded articles set forth in the Summary as well as other microwave molded articles. Each microwave molded article described above is for illustrating the present invention and not intended to limit the present invention. All other equivalent alterations or modifications made without departing from the spirit of the disclosure of the invention should be included within the scope of the appended claims.

## Claims

1. A foamable composition for preparing foamed thermoplastic polyurethane, comprising non-foamed thermoplastic polyurethane particles and a foaming agent, wherein the non-foamed thermoplastic polyurethane particles have a viscosity between 10,000 poise and 40,000 poise measured at 170°C according to JISK 7311 test method.

2. The foamable composition of claim 1, wherein the viscosity of the non-foamed thermoplastic polyurethane particles is between 15,000 poise and 35,000 poise.

3. The foamable composition of any of claims 1 to 2, wherein the non-foamed thermoplastic polyurethane particles have a particle size between 2.5 mm and 4.5 mm.

4. The foamable composition of any of claims 1 to 3, wherein the non-foamed thermoplastic polyurethane particles have a hardness of 40 Shore A scale to 64 Shore D scale.

5. The foamable composition of any of claims 1 to 4, wherein the non-foamed thermoplastic polyurethane particles have a density between 1.0 g/cm³ and 1.25 g/cm³.

6. The foamable composition of any of claims 1 to 5 comprising 100 parts by weight of the non-foamed thermoplastic polyurethane particles and 5 to 25 parts by weight of the foaming agent.

7. A foamed thermoplastic polyurethane, prepared through the foaming and pelletizing of the foamable composition of any of claims 1 to 6.

8. The foamed thermoplastic polyurethane of claim 7 wherein the foamed thermoplastic polyurethane contains residual foaming agent.

9. The foamed thermoplastic polyurethane of any of claims 7 to 8, wherein the foamed thermoplastic polyurethane has a particle size between 3 mm and 7.5 mm.

10. The foamed thermoplastic polyurethane of any of claims 7 to 9, wherein the foamed thermoplastic polyurethane has a hardness of 40 Shore C scale to 80 Shore C scale.

11. The foamed thermoplastic polyurethane of any of claims 7 to 10, wherein the foamed thermoplastic polyurethane has a density between 0.2 g/cm³ and 0.8 g/cm³.

12. The foamed thermoplastic polyurethane of any of claims 7 to 11, wherein a single particle of the foamed thermoplastic polyurethane has a plurality of colors.

13. A microwave molded article, prepared from the foamed thermoplastic polyurethane of any of claims 7 to 12 being treated by microwave.

14. The microwave molded article of claim 13, wherein the microwave molded article has a density between 0.15 g/cm³ and 0.6 g/cm³.

15. The microwave molded article of any of claims 13 to 14, wherein the microwave molded article has a hardness of 40 Shore C scale to 80 Shore C scale.

16. A method of manufacturing the microwave molded article of any of claims 13 to 15, wherein a power of microwave is between 500 W and 30,000 W.

17. The method of claim 16, wherein the duration of microwave is between 3 seconds and 300 seconds.
